Europäisches Patentamt

(19) European Patent Office

Office européen des brevets

(11) Publication number: **0 099 115**

**A2**

(12) **EUROPEAN PATENT APPLICATION**

(21) Application number: **83106835.8**

(22) Date of filing: **12.07.83**

(51) Int. Cl.³: **B 60 R 13/06**
**B 62 D 25/12, B 60 H 1/28**

(30) Priority: **16.07.82 JP 124193/82**

(43) Date of publication of application:
**25.01.84 Bulletin 84/4**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Nakamura, Yoshiharu**
**B-201, Haimato-Atsugi 1670-1, Okada**
**Atsugi-shi Kanagawa-ken(JP)**

(72) Inventor: **Otsu, Morio**
**773-9, Enzo**
**Chigasaki-shi Kanagawa-ken(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Cowling structure for an automotive vehicle.

㉗ A cowling structure for an automotive vehicle having an elastic molding for concealing an adhered portion between a windshield and the cowling box. The molding is secured to the edge of a cowl top panel adjacent the windshield and is adapted to elastically and sealingly contact the bottom portion of the windshield in water-tight fashion. The cowl top panel is detachably installed on the cowling box to close the open upper end thereof, thereby facilitating easy assembly and maintenance or repair of vehicle equipment located in the cowling box.

FIG.1

## COWLING STRUCTURE FOR AN AUTOMOTIVE VEHICLE

BACKGROUND OF THE INVENTION

The present invention relates generally to a cowling structure for an automotive vehicle, which can be conveniently assembled to a vehicle body and effectively establishes a water-proof seal between a cowl top panel and the bottom portion of the windshield. More specifically, the invention relates to a molding disposed between the lower end of the windshield and the cowl top panel to provide a water-proof seal and a decorative appearance.

Conventionally, a cowl top panel is secured to a cowling box adjacent the windshield. The windshield is bonded to the assembly of the cowling box and the cowl top panel so that an essentially V-shaped groove is formed between the cowl top panel and the lower end of the windshield. A water-proofing molding is mounted over the groove to prevent rain water, washer fluid and the like from entering the interior of the cowling box.

The molding is usually positioned over the groove after the cowling assembly and the windshield are assembled. This required additional process step results in higher assembly costs in manufacturing the vehicle. In addition, the water-proofing effect of the conventional molding is apt to weaken after a long period of use and permit leakage of water into the interior and rusting of the cowling box.

## SUMMARY OF THE INVENTION

Therefore, it is an object of the present invention to provide a cowling structure which allows a water-proofing molding to be mounted without an additional asembling step and which ensures water-proofing effectiveness for a long period of use.

Another object of the present invention is to provide a cowling structure having a water-proofing molding preassembled to a cowl top panel detachably attached to a cowling box.

These and other objects of the invention are achieved by providing a cowling structure comprising a cowl top panel detachably connected to a cowl box panel, and a molding on a lateral edge of the cowl top panel adjacent the bottom of the windshield. The molding has a tongue portion extending toward the windshield and adapted to establish sealing contact at the ends thereof. The molding is made of a synthetic resin and is deformable to permit installation of the windshield onto the cowling assembly.

According to the present invention, a cowling structure comprises a cowling box, a cowl top panel, and an elastic molding attached to the cowl top panel and having a tongue portion extending towards the lower end portion of a windshield to elastically and sealingly contact the windshield in order to establish a water-tight seal therebetween.

## BRIEF DESCRIPTION OF THE DRAWINGS

The present invention will be understood more fully from the following detailed description and from the accompanying drawings of a preferred embodiment which, however, should not be taken as limiting the invention but are for illustration and explanation only.

In the drawings:

Fig. 1 is a partial perspective view of an automotive vehicle to which a cowling structure according to the present invention is applied;

Fig. 2 is an enlarged and exploded perspective view of a preferred embodiment of cowling structure;

Fig. 3 is a perspective view of a cowl top panel;

Fig. 4 is a perspective view of a cowl top panel having a molding mounted thereon;

Fig. 5 is a cross-section taken along line V-V of Fig. 1;

Fig. 6 is an enlarged cross-section taken along line VI-VI of Fig. 1; and

Fig. 7 is an enlarged cross-section taken along line V-V of Fig. 1.

DESCRIPTION OF THE PREFERRED EMBODIMENT

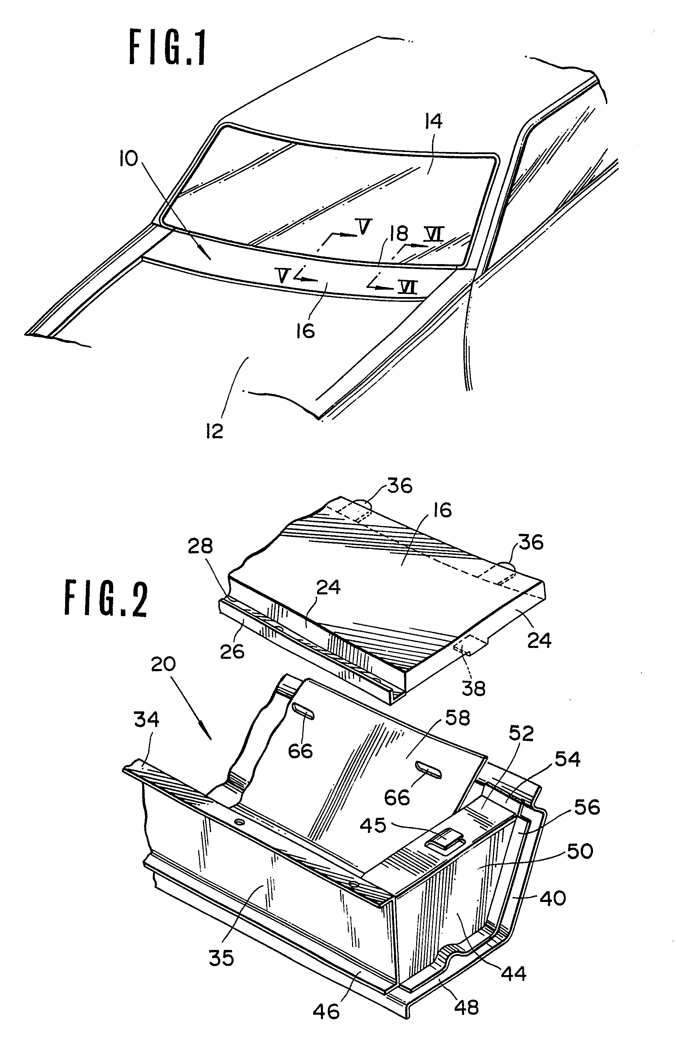

Referring now to the drawing, particularly to Fig. 1, a cowling assembly 10 is provided between an engine hood 12 and a windshield 14 for reinforcing a vehicle body against lateral stress, for introducing ambient air for an air conditioner unit, and for receiving a wiper-and-washer assembly (not shown). A cowl top panel 16 is positioned on substantially the same plane as the engine hood to form a substantially smooth upper surface for the vehicle front portion. Between the cowl top panel 16 and the lower end of the windshield 14, a molding 18 is provided for providing decorative appearance and sealing the cowl top panel to the windshield to rain water, washer fluid and so forth from entering the cowling assembly.

Figs. 2 to 5 show a detail of the cowling assembly 10 of Fig. 1. The cowling assembly 10 comprises a cowling box 20 and the cowl top panel 16. Cowl top panel 16 is formed into essentially thin box-shaped configuration with an upper plane major section 22 and a vertical circumferential wall section 24. A substantially L-shaped flange 26 extends from the base of circumferential wall section 24 at the side remote from the windshield 14, to define a water drain groove 28 therewith. The horizontal section of the L-shaped flange 26 is formed with a plurality of circular openings 30 which are aligned with circular openings 32 formed in a lateral flange 34 extending from the top of the cowling box front panel 35. The cowl top panel 16 has a plurality of strips or tabs 36 extending from the base of circumferential wall section 24 adjacent the windshield 14. On both side portions of circumferential wall section 24 the cowl top panel 16 also has inwardly extending retainer strips 38.

Cowling box 20 comprises a dash upper panel 40, a cowling box front panel 35 and cowling box side panels 44.

Front panel 35 has flanges 34 and 46 along the upper and lower edges thereof, respectively. Flange 46 is fixedly secured to the horizontal surface 48 of the dash upper panel. The side panels 44 each has a substantially vertical major section 50 and a horizontal upper section 52 so that they have an essentially L-shaped configuration. The side panel 44 also has flanges 54 and 56 fixed to the horizontal surface 48 and the sloped surface of the dash upper panel 40. The side panel 44 is further formed with a hook 45 which is adapted to engage with the retainer strips 38 on cowl top panel 16. Thus, the dash upper panel 40, a front panel 35 and the side panel define the substantially box form cowling box as assembled with an internal space therein.

A stiffener 58 is inserted into the internal space of the cowling box 20. Stiffener 58 is formed with a flange 60 extending along the lower edge thereof. The flange 60 is fixed onto the dash upper panel 40. Stiffener 58 substantially follows the slope of windshield 14. The upper edge of the stiffener is positioned behind the lower end of the windshield 14 and is bonded onto the rear surface of the windshield with an adhesive 62. An upper flange 64 of the dash upper panel 40 is secured to the upper end of the stiffener.

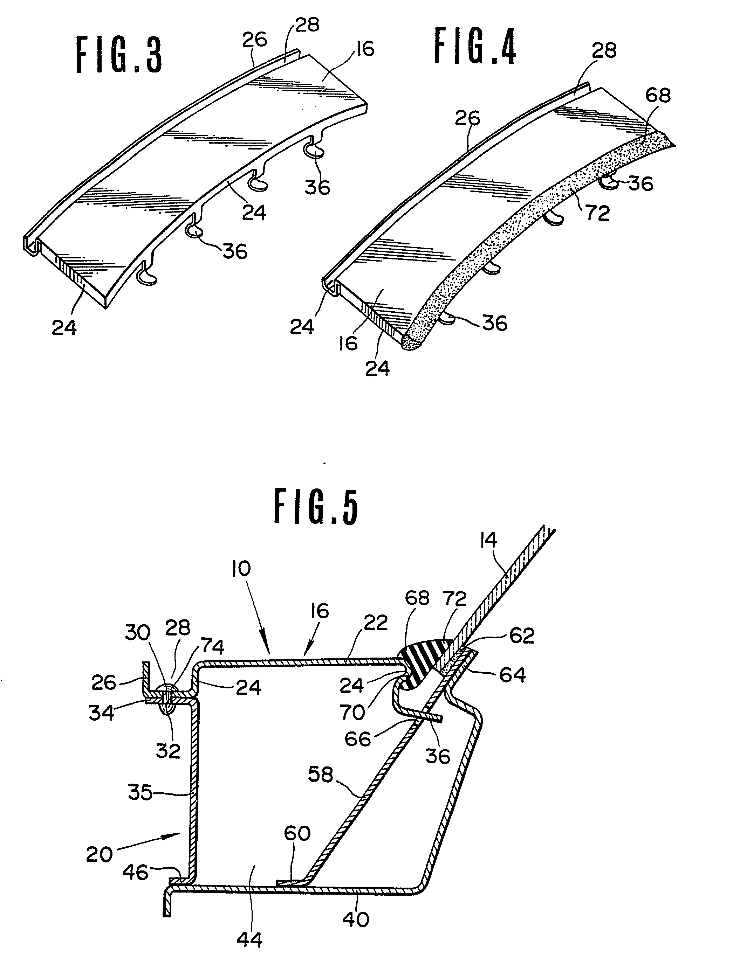

Stiffener 58 is formed with a plurality of elongated openings 66 along the lower edge of the windshield aligned with and adapted to receive the strips or tabs 36 of the cowl top panel 16, as shown in Fig. 5.

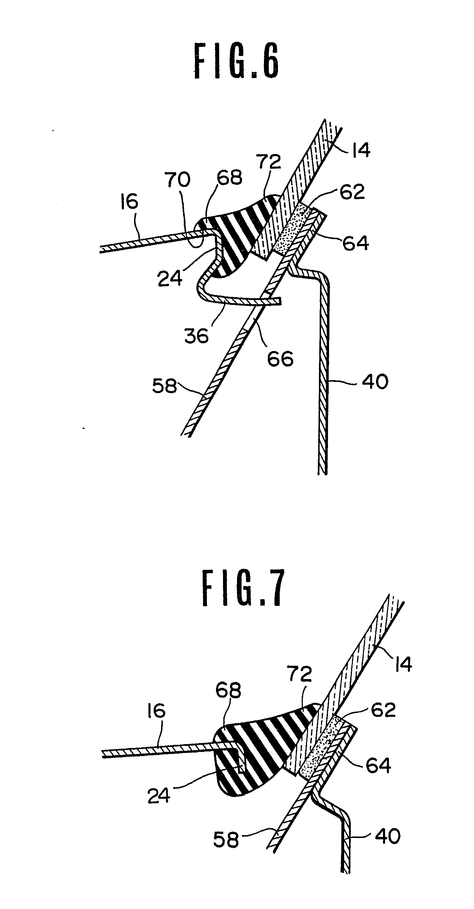

As shown in Fig. 4, a resilient molding 68 is attached to the rear portion of circumferential wall section 24 of the cowl top panel 16. Molding 68 has plurality of recessed sections 70 for receiving the strips 36, as shown in Figs. 5 and 6. Molding 68 has a rearwardly extending tongue portion 72 which is adapted to sealingly and elastically contact the bottom front surface of windshield 14 to establish a water-tight seal therebetween.

Figure 7 is a partial sectional view of the cowl top panel and resilient molding assembly taken along line VII-VII in Figure 1 showing how the circumferential wall section 24 between the tabs 36 is embedded in the body of resilient molding 68 to secure the molding to the cowl top panel.

In the illustrated embodiment, after wiper-and-washer assemblies and so forth are mounted in the cowling box, cowl top panel 16 is assembled to cowling box 20 by engagement of the strips or tabs 36 and the openings 66. The front end of the cowl top panel 16 is thereafter of fixed to flange 34 of cowling box front panel 35 with a fastener 74 passing through the openings 30 and 32. At this time, the tongue portion 72 of the molding 68 sealingly contacts to the front surface of the lower end of the windshield 14 in water-tight fashion. Thus, assembly of the cowling assembly onto the vehicle body is simple and

effective. Further, the cowl top panel is detachable from the cowling box to allow easy maintenance or repair of equipment such as the wiper-and-washer assemblies.

The foregoing description has been set forth merely to illustrate the invention and is not intended to be limiting. Since modifications of the described embodiments incorporating the spirit and substance of the invention may occur to persons skilled in the art, the scope of the invention is to be limited solely with respect to the appended claims and equivalents.

WHAT IS CLAIMED IS:

1.    A cowling structure for an automotive vehicle comprising:

a cowling box;

a cowl top panel covering said box; and

an elastic molding preassembled to the cowl top panel and having a tongue portion extending toward the lower end portion of a windshield to elastically and sealingly contact said windshield to establish a water-tight seal therebetween.

2.    A cowling structure for an automotive vehicle comprising:

a cowling box having an open upper end;

a cowl top panel covering the upper end of said cowling box; and

an elastic molding preassembled to a lateral edge of said cowl top panel adjacent a windshield, said molding having a tongue portion extending toward said windshield to elastically and sealingly contact the lower end of said windshield in water-tight fashion.

3.    A cowling structure for an automotive vehicle comprising:

a cowling box installed in front of the lower end of a windshield;

a cowl top panel detachably installed on said cowling box; and

a molding secured onto the edge of said cowl top panel adjacent said windshield, said molding having an extension extending toward and sealingly contacting said windshield, said molding being secured to said cowl top panel as a preassembly in advance of assembling the cowl top panel to said cowling box..

4. .The structure as set forth in claim 3, wherein said cowl top panel is provided with a retainer strip releasably engageable with said cowling box to detachably install the cowl top panel on the cowling box.

5. The structure as set forth in claim 4, which further comprises a stiffener in the interior of said cowling box, said stiffener member being formed with an opening for receiving a tab formed on said cowl top panel.

# FIG.1

10

14

18

V

VI

V

VI

16

12

# FIG.2

36

16

28

36

24

26

38

24

20

34

66

58

52

54

45

56

66

50

40

35

44

46

48

FIG.3

FIG.4

FIG.5

# FIG.6

# FIG.7